(19) Europäisches Patentamt
European Patent Office
Office européen des brevets

(11) **EP 3 928 448 B1**

(12) **EUROPEAN PATENT SPECIFICATION**

(45) Date of publication and mention
of the grant of the patent:
**21.06.2023 Bulletin 2023/25**

(21) Application number: **19709809.8**

(22) Date of filing: **18.02.2019**

(51) International Patent Classification (IPC):
*H04L 1/00* (2006.01)     *H04W 88/08* (2009.01)

(52) Cooperative Patent Classification (CPC):
**H04L 1/0003; H04L 1/0009; H04L 1/0025;**
Y02D 30/50

(86) International application number:
**PCT/SE2019/050146**

(87) International publication number:
**WO 2020/171744 (27.08.2020 Gazette 2020/35)**

(54) **METHODS AND UNITS OF A BASE STATION SYSTEM FOR TRANSMISSION OVER FRONTHAUL LINKS**

VERFAHREN UND EINHEITEN EINES BASISSTATIONSSYSTEMS ZUR ÜBERTRAGUNG ÜBER FRONTHAUL-VERBINDUNGEN

PROCÉDÉS ET UNITÉS D'UN SYSTÈME DE STATION DE BASE POUR TRANSMISSION SUR DES LIENS FRONTHAUL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.12.2021 Bulletin 2021/52**

(73) Proprietor: **TELEFONAKTIEBOLAGET LM
ERICSSON (PUBL)**
**164 83 Stockholm (SE)**

(72) Inventors:
• **CEDERHOLM, Daniel**
**192 77 Sollentuna (SE)**
• **LU, Chenguang**
**191 63 Sollentuna (SE)**
• **BERG, Miguel**
**191 41 Sollentuna (SE)**

(74) Representative: **Ericsson
Patent Development
Torshamnsgatan 21-23
164 80 Stockholm (SE)**

(56) References cited:
**WO-A1-2017/162299     US-A1- 2018 034 669**

• **SULIEMAN NABEEL I ET AL: "Reliable and
resilient coordinated multi point fronthaul
networks", 2018 IEEE 19TH WIRELESS AND
MICROWAVE TECHNOLOGY CONFERENCE
(WAMICON), IEEE, 9 April 2018 (2018-04-09),
pages 1-4, XP033349162, DOI:
10.1109/WAMICON.2018.8363916 [retrieved on
2018-05-23]**

**Description**

<u>Technical Field</u>

The present disclosure relates generally to methods and units of a base station system for handling user plane data streams for transmission over fronthaul links between a baseband unit and a radio unit. The present disclosure further relates to computer programs and carriers corresponding to the above methods and units.

<u>Background</u>

In a distributed base station system, radio access network (RAN), processing is conducted by two separate units: a remote radio unit (RRU) aka radio unit (RU), and a baseband unit (BBU). The BBU is connected to the RU via a fronthaul link. "Fronthaul" refers to an interface in a Radio Base Station (RBS) system somewhere between the baseband processing and the antenna(s), or as the Common Public Radio Interface (CPRI) cooperation defines it, between a Radio Equipment Control (REC) and the Radio Equipment (RE). The RU is connected to one or more antennas through which the RU wirelessly communicates with at least one user equipment (UE). The BBU is in its turn connected to other base station systems or base stations, and to a core network of a wireless communication system. The BBU is logically centralized and there may be more than one RU connected to each BBU. Traditionally, the BBU performs advanced radio coordination features such as joint detection, joint decoding, coordinated multi-point transmission (CoMP), to increase the spectrum efficiency and network capacity, as well as baseband processing, whereas the RUs perform radio frequency (RF) processing and transmission/reception of the RF processed signals.

The BBUs and RUs can be located geographically close to each other, e.g. with the BBUs at the base of an antenna tower and the RUs in the top. However, recently the concept of Centralized Radio Access Networks (C-RAN) has received a lot of attention and then the BBUs are located at a more central location to allow tighter coordination, resource pooling and site reductions. The advantages of centralized baseband processing are increased even further with the recent trend of virtualizing parts of the radio functionality, since scaling becomes easier and less costly hardware can be used.

For traditional fronthaul, such as described in a Common Public Radio Interface (CPRI) Specification version 7.0 dated 2015-10-09, a full transport protocol is defined where bit streams of user plane data, which comprises timedomain baseband complex (IQ) samples are representing different antenna carriers (AxC) according to a pre-defined mapping scheme. The IQ samples are carried in communication resources that are in CPRI called AxC containers. CPRI also defines a control word that is used to transport synchronization information and control and Operations & Maintenance (O&M) data. The main drawback with the CPRI approach is that it requires very high transport bit rates, and with the evolvement of radio technologies towards the fifth generation (5G) using even wider radio bandwidths and more antennas this becomes complex and costly to handle.

Recently the fronthaul has evolved with the enhanced CPRI (eCPRI) standard described in a eCPRI Specification V1.1 dated 2018-01-10, which defines a packet-based fronthaul protocol that is transport networking layer agnostic, i.e. it can be implemented with different transport networks such as Ethernet and Internet Protocol-based (IP-based) networks. eCPRI also defines a flexible functional decomposition to make it possible to decrease the fronthaul data rate requirement by moving more functionality to the radio units, e.g. Fast Fourier Transform (FFT) and Inverse FFT (IFFT) functionality, so that frequency domain samples are transported instead of time domain samples. An XRAN/ORAN organization has a fronthaul group that also defines a fronthaul interface, referred to as xRAN FH, which is the interface between a Radio Unit (RU) and a Lower Layer Split Central Unit (lls-CU). This is described in xRAN Fronthaul Working Group - Control, User and Synchronization Plane Specification - XRAN-FH.CUS.0-v02.01 released December 15, 2018.

Fronthaul data rates can also be decreased by utilizing compression techniques. Examples of such methods are resampling and re-quantization. More advanced options can also be used such as described in international patent application WO2018/004409. Different data formats and compression methods are also described in the above mentioned xRAN specification.

Even with different functional splits and/or compression, the fronthaul data rate might be too high to be transported over one physical fronthaul link. Because of cost reasons, e.g. cost of Small Form-factor Pluggable/Quad Small Form-factor Pluggable (SFP/QSFP) modules, or implementation aspects such as bus speeds etc., it might be advantageous to use several fronthaul links of lower speed instead of fewer links supporting higher data rates, especially since SFP/QSFP modules are designed for fixed speeds such as 2.5, 5, 10, 25, 40, 100 Gbit/s etc. For example, some implementations might prefer to use two 10 Gbps links instead of one 25 Gbps link. For eCPRI it is possible to use link aggregation techniques so that several links appear as one logical data pipe. However, for CPRI and eCPRI implemented as separate logical links, the IQ data need to be mapped to the different links. In CPRI this is supported with the feature "passive link" which can be used for capacity expansion. One of the links is then selected as "the active link" carrying the full C&M channel, while the other link is selected as "the passive link" and only carries IQ data and synchronization information.

In scenarios with multiple logical fronthaul links, data will be lost if one of the links fails. The passive link feature in CPRI defines a fallback for the C&M channel where the passive link can take over if the active link fails. However, no fallback is defined for the IQ data meaning that all data mapped into the AxC containers of that link will be lost if that link fails. This can lead to that IQ data of several antennas are lost or that radio carriers are lost. Consequently, there is a need of a solution for handling user plane data for a base station system having multiple fronthaul links, when one of the multiple fronthaul links fails.

US2018/034669 A1 discloses an adaptive fronthaul protocol for communication between a BBU and an RRU. The adaptive fronthaul protocol has provisions for adapting to conditions of the fronthaul link and radio network by changing the way data is communicated over the fronthaul link.

Summary

It is an object of the invention to address at least some of the problems and issues outlined above. An object of embodiments of the invention is to handle user plane data for base station systems having multiple fronthaul links, when one of the multiple fronthaul links fails. It is possible to achieve these objects and others by using methods and units as defined in the attached independent claims. The invention is defined in the attached independent claims and further details are defined in the attached dependent claims.

Brief Description of Drawings

The solution will now be described in more detail by means of exemplary embodiments and with reference to the accompanying drawings, in which:

Fig. 1 is a block diagram illustrating an example of a base station system in which the present invention may be used.

Fig. 2 is a flow chart illustrating a method performed by a first unit of a base station system, according to possible embodiments.

Fig. 3 is a flow chart illustrating a method performed by a second unit of a base station system, according to further possible embodiments.

Fig. 4 is a block diagram illustrating an embodiment of a base station system in more detail, in which the present invention may be used.

Fig. 5 is a flow chart illustrating a method performed by a BBU or an RU of a base station system, according to possible embodiments.

Fig. 6 is a flow chart illustrating another method performed by a BBU or an RU of a base station system, according to possible embodiments.

Fig. 7 is a block diagram illustrating a first unit of a base station system in more detail, according to further possible embodiments.

Fig. 8 is a block diagram illustrating a second unit of a base station system in more detail, according to further possible embodiments.

Detailed Description

Briefly described, a solution is provided to create a fallback solution for communicating user plane data such as IQ data to minimize the radio performance impact when a fronthaul link out of a plurality of fronthaul links between a BBU and an RU is dropped. This is done, according to an embodiment, by determining the overall capacity of the fronthaul links that are still functional when one fronthaul link has dropped, and then adapting and remapping the user plane data streams to the functional fronthaul links.

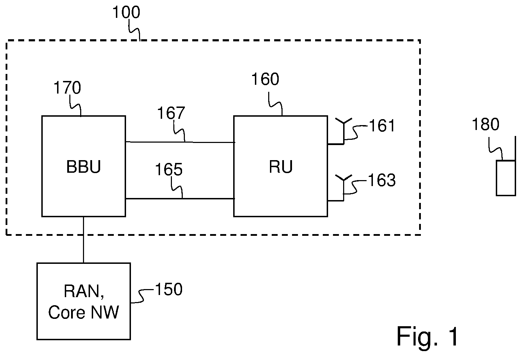

Fig. 1 illustrates a wireless communication network in which the present invention may be used. The wireless communication network comprises a distributed base station system 100, which in turn comprises a BBU 170 and a RU 160. The BBU 170 has connections to other base station nodes or other RAN nodes and further to a core network (symbolized with 150 in fig. 1) so that the distributed base station system can communicate to other nodes of the communication network. The BBU 170 is connected with the RU 160 via a first fronthaul link 165 and at least one second fronthaul link 167. The RU 160 further has a plurality of antennas 161, 163 through which wireless signals are transmitted towards and received from one or more wireless devices 180. The wireless signals represent data to be communicated from or to the one or more wireless devices 180. The BBU 170 and the RU 160 comprise RAN functionality for handling the data and signals to be communicated between the RU 160 and the one or more wireless devices 180. The RAN functionality is distributed between the BBU and the RU.

The wireless communication network 100, in which the distributed base station 100 is to be used, may be any kind of wireless communication network that can provide radio access to wireless communication devices. Examples of such wireless communication networks are Global System for Mobile communication (GSM), Enhanced Data Rates for GSM Evolution (EDGE), Universal Mobile Telecommunications System (UMTS), Code Division Multiple Access 2000 (CDMA 2000), Long Term Evolution (LTE), LTE Advanced, Wireless Local Area Networks (WLAN), Worldwide Interoperability for Microwave Access (WiMAX), WiMAX Advanced, as well as fifth generation wireless communication networks based on technology such as New Radio (NR).

The one or more wireless devices 180, may be any type of device capable of wirelessly communicating with the RU 160 using radio signals. For example, the wireless device 180 may be a User Equipment (UE), a machine-type UE or a UE capable of machine to machine (M2M) communication, a sensor, a tablet, a mobile terminal, a smart phone, a laptop embedded equipped (LEE), a laptop mounted equipment (LME), a USB dongle, a Customer Premises Equipment (CPE) etc.

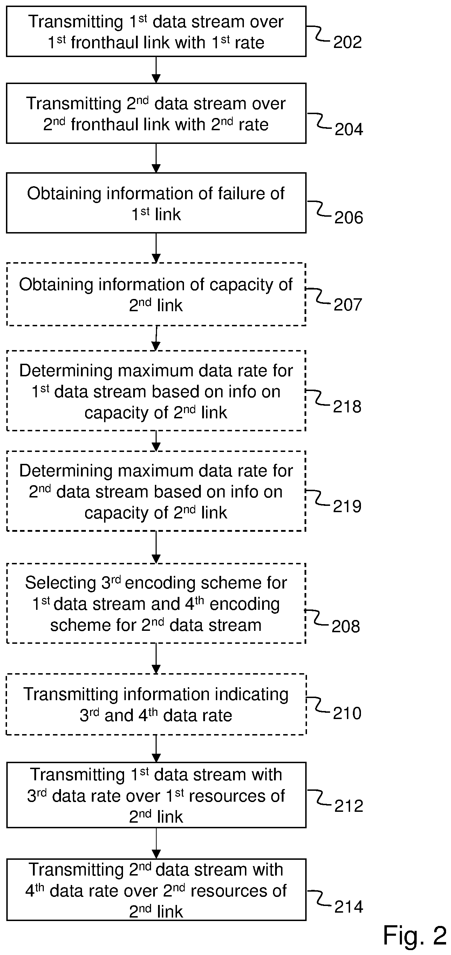

Fig. 2, in conjunction with fig. 1, describes a method performed by a first unit of a base station system 100 of a wireless communication network, for handling user plane data streams for transmission over fronthaul links between the first unit and a second unit of the base station system. The base station system 100 comprises a baseband unit 170 and a radio unit 160. The radio unit 160 is arranged to transmit the user plane data streams wirelessly to, and receive from, one or more wireless communication devices 180. Also, the first unit is the baseband unit 170 and the second unit is the radio unit 160, or alternatively the first unit is the radio unit 160 and the second unit is the baseband unit 170. The method comprises transmitting 202 a first user plane data stream to the second unit over a first fronthaul link 165, the first user plane data stream being encoded with a first encoding scheme resulting in a first data rate, and transmitting 204 a second user plane data stream to the second unit over at least one second fronthaul link 167, the second user plane data stream being encoded with a second encoding scheme resulting in a second data rate. the method further comprises obtaining 206 information of a link failure of the first fronthaul link 165, and in response to the obtained information of the link failure, and when the first and the second user plane data streams do not fit into the at least one second fronthaul link 167 encoded with the first and the second encoding scheme, respectively, transmitting 212, to the second unit over first communication resources of the at least one second fronthaul link 167, the first user plane data stream encoded with a third encoding scheme resulting in a third data rate, and transmitting 214, to the second unit over second communication resources of the at least one second fronthaul link 167, the second user plane data stream encoded with a fourth encoding scheme resulting in a fourth data rate, wherein at least one of the third data rate is lower than the first data rate and the fourth data rate is lower than the second data rate.

"User plane data" may be for example IQ data. The first and the at least one second fronthaul links may be parallel links. The first and the at least one second fronthaul links comprise mutually separate physical links somewhere between the first and the second unit. In other words, the first and the second unit may be partly connected via a network but the first and the at least one second fronthaul links also have a part-link that is not used by the other link. Also, the first and the second fronthaul link may be separate physical links the whole way between the first and the second unit. Encoding the first user plane data stream with a third encoding scheme resulting in a third data rate that is lower than the first data rate may comprise compressing the first user plane data with a compression scheme that results in the first user plane data stream being transmitted with the third data rate. The compression scheme then compresses the first user plane data stream compared to when it was encoded with the first encoding scheme. The same as above is valid for the second user plane data stream and fourth encoding scheme. Normally, the third data rate is lower than the first data rate and also the fourth data rate is lower than the second data rate in order to fit both the first and the second user plane data stream into the first and the second communication resources of the at least one second fronthaul link. However, it is also possible that only one of the first and second user plane data stream receives a lower data rate and the other one keeps its original data rate. It depends on the available amount of capacity in the at least second fronthaul link. That at least one of the third data rate is lower than the first data rate, and the fourth data rate is lower than the second data rate, may signify that at least one of the third encoding scheme is different from the first encoding scheme, and the fourth encoding scheme is different from the second encoding scheme. The first and the second encoding scheme may be the same or mutually different encoding schemes. The third and fourth encoding scheme may be the same or mutually different encoding schemes.

By such a method, both the first and the second user plane data stream can be sent to the second unit, even though the first fronthaul link, which previously carried the first user plane data stream, has failed. In this method, the first and second user plane data stream are sent over the at least one second link but with a lower data rate in order to fit both data streams into the same at least one second link.

According to an embodiment, the method further comprises, in response to the obtaining 206 of information of a link failure of the first fronthaul link 165, obtaining 207 information of a total available capacity of the at least one second fronthaul link 167, and based on the obtained information of total available capacity, selecting 208 the third encoding scheme for the first user plane data stream and the fourth encoding scheme for the second user plane data stream.

To obtain information of the total capacity may be to calculate current total capacity of the at least one second fronthaul link based on e.g. measurements, to directly measure the capacity of the at least one second fronthaul link or to obtain pre-known data of the at least one second fronthaul link. Hereby, a most appropriate encoding scheme for the first and second user plane data stream can be selected based on current available capacity of the at least one second fronthaul link. Consequently, the capacity of the at least one second link is well utilized.

According to a variant of the above embodiment, the third encoding scheme is selected 208 out of one or more encoding schemes that are pre-known to the first and the second unit, and the fourth encoding scheme is selected out of one or more encoding schemes that are pre-known to the first and the second unit. The one or more pre-known encoding schemes for the first user plane data stream may each be associated with a compression of data compared to using the first encoding scheme. However, the compression and thus the data rate, may be mutually different for the one or more pre-known encoding schemes. The one or more pre-known encoding schemes for the second user plane data stream may each be associated with a compression of data compared to using the second encoding scheme. However, the compression and thus the data rate, may be mutually different for the one or more pre-known encoding schemes. The one or more pre-known encoding schemes for the first user plane data stream may each be associated with a pre-known mapping of the first user plane data stream to the first communication resources of the at least second fronthaul link. In a similar way, the one or more pre-known encoding schemes for the second user plane data stream may each be associated with pre-known mapping of the second user plane data stream to the second communication resources of the at least second fronthaul link. By having a number of pre-known encoding schemes to select from (and corresponding decoding schemes at the second unit), the second unit can determine itself which encoding scheme that the first unit has used, based on the information on available capacity, or alternatively, only a few bits are necessary to send to inform the second unit of the selected third and fourth encoding schemes, as the pre-known encoding schemes may have agreed codes in a communication protocol between the first and the second unit.

According to another variant of the above embodiment, the method further comprises determining 218 a maximum data rate for the first user data stream based on the information of the total available capacity. Further, the selecting 208 of the third encoding scheme and consequently the third data rate is performed based on the determined maximum data rate for the first user data stream, wherein the third data rate is lower than or the same as the maximum data rate for the first user data stream. The method further comprises determining 219 a maximum data rate for the second user data stream based on the information of the total available capacity and the selected third data rate. Further, the selecting 208 of the fourth encoding scheme and consequently the fourth data rate is performed based on the determined maximum data rate for the second user data stream, wherein the fourth data rate is lower than or the same as the maximum data rate for the second user data stream.

Such a method would be a rather dynamic way of selecting data rates for the first and second user data stream based on the total available capacity. To get an even better result for the third and fourth data rates, this method could be a more iterative process. Based on e.g. a priority difference between the first and the second user data streams, a first guess of maximum data rate for the first user data stream can be made, and then the third encoding scheme is selected that has a third data rate equal to or below the first guess of maximum data rate for the first user data stream. The second user data stream can then use the capacity that is left on the link, i.e. the maximum data rate for the second user data stream is based on the total available capacity and the third data rate.

According to another embodiment, the method further comprises transmitting 210 information indicating the third encoding scheme and the fourth encoding scheme to the second unit. "Information indicating the third and fourth encoding scheme" may be a signal informing to "switch to agreed fallback encoding schemes" (i.e. the third and fourth encoding scheme), or it may be explicit information of the third and fourth encoding scheme. Hereby, the second unit would know which encoding schemes that are chosen by the first unit. In case the first unit only has a number of encoding schemes to choose from that are pre-agreed between the first and the second unit, the first unit only has to send very short information with a code indicating the encoding schemes.

However, and according to another embodiment, the second unit does not need to be informed by the first unit of the third and fourth encoding scheme. In this embodiment, the second unit determines itself that a link failure has occurred on the first link, and based on this determination returns to a pre-agreed third and fourth encoding/decoding scheme and a pre-agreed third and fourth mapping scheme, in case of mapping. Also, in case there are more than one pre-agreed third and fourth encoding/decoding scheme to select from, the second unit can determine itself, and autonomously which ones that will be selected by the first unit, based on total capacity of the at least one second link. However, the safest way would be to handshake the third and fourth encoding/decoding scheme and possible mapping scheme via a transmitting step 210 and a possible acknowledgement message sent from the second unit in response to the second unit receiving the transmitted information indicating the third and fourth encoding schemes.

According to another embodiment, the method further comprises mapping the first user plane data stream encoded with the third encoding scheme into the first communication resources of the at least one second fronthaul link according to a third mapping scheme, and mapping the second user plane data stream encoded with the fourth encoding scheme into the second communication resources of the at least one second fronthaul link according to a fourth mapping scheme.

According to a variant of this embodiment, the method further comprises transmitting information indicating the third mapping scheme and the fourth mapping scheme to the second unit.

According to another embodiment, the method further comprises, when the third encoding scheme induces a different delay than the first encoding scheme for the first user plane data stream, or the fourth encoding scheme induces a different delay than the second encoding scheme for the second user plane data stream, adapting timing related functions of the first unit and/or the second unit to the induced different delay. Hereby, timing related functions such as timing advance algorithms can calculate and use correct timing advance values based on the induced different delay due to the new encoding scheme.

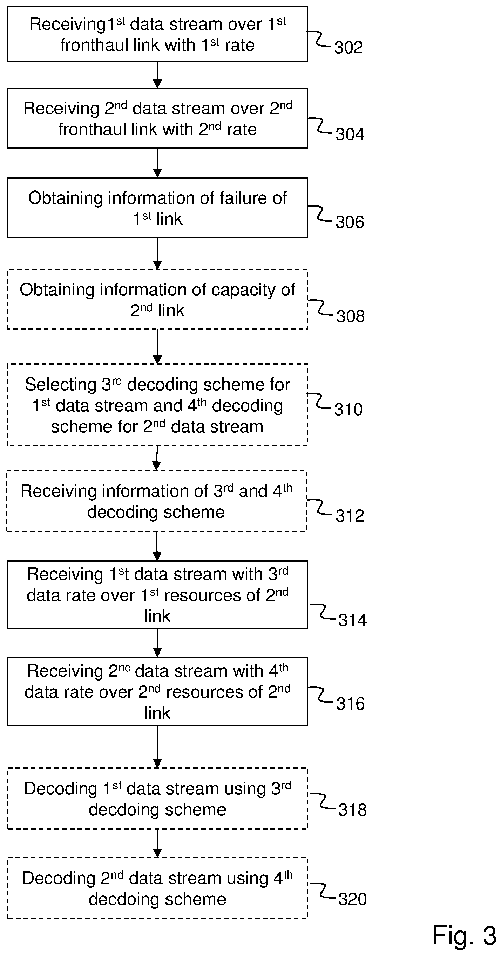

Fig. 3, in conjunction with fig. 1, describes a method performed by a second unit of a base station system 100 of a wireless communication network, for handling user plane data streams for transmission over fronthaul links between the second unit and a first unit of the base station system. The base station system comprises a baseband unit 170 and a radio unit 160. The radio unit 160 is arranged to transmit the user plane data streams wirelessly to, and receive from, one or more wireless communication devices 180. Further, the first unit is the baseband unit 170 and the second unit is the radio unit 160, or the first unit is the radio unit 160 and the second unit is the baseband unit 170. The method comprises receiving 302 a first user plane data stream from the first unit over a first fronthaul link 165, the first user plane data stream being encoded with a first encoding scheme resulting in a first data rate, and receiving 304 a second user plane data stream from the first unit over at least one second fronthaul link 167, the second user plane data stream being encoded with a second encoding scheme resulting in a second data rate. The method further comprises obtaining 306 information of a link failure of the first fronthaul link 165, and in response to the obtained information of the link failure, and when the first and the second user plane data streams do not fit into the at least one second fronthaul link 167 encoded with the first and the second encoding scheme, respectively, receiving 314, from the first unit over first communication resources of the at least one second fronthaul link 167, the first user plane data stream encoded with a third encoding scheme resulting in a third data rate, and receiving 316, from the first unit over second communication resources of the at least one second fronthaul link 167, the second user plane data stream encoded with a fourth encoding scheme resulting in a fourth data rate, wherein at least one of the third data rate is lower than the first data rate, and the fourth data rate is lower than the second data rate.

According to a claimed embodiment, the method further comprises decoding 318 the first user plane data stream using a third decoding scheme corresponding to the third encoding scheme, and decoding 320 the second user plane data stream using a fourth decoding scheme corresponding to the fourth encoding scheme. The second unit, when obtaining the information of a link failure of the first link, may use a pre-agreed third and fourth encoding/decoding scheme, pre-agreed to be used by the first and second unit when there is a failure of the first link. Alternatively, the second unit may determine itself which third and fourth encoding/decoding scheme to use based on information of a total available capacity of the at least one second link (see below),

Still alternatively, the second unit may be informed of the third and fourth encoding/decoding scheme in a message from the first unit. That is, according to an embodiment, the method further comprises receiving 312, from the first unit, information indicating the third encoding scheme and the fourth encoding scheme.

According to another embodiment, the method further comprises demapping the first user plane data stream encoded with the third encoding scheme according to a de-mapping scheme that corresponds to a mapping scheme used at the first unit for mapping the first user plane data into the first communication resources of the at least one second fronthaul link, and de-mapping the second user plane data stream encoded with the fourth encoding scheme according to a de-mapping scheme that corresponds to a mapping scheme used at the first unit for mapping the second user plane data into the second communication resources of the at least one second fronthaul link. Further, the method may comprise receiving, from the first unit, information indicating the third mapping scheme and the fourth mapping scheme.

According to another embodiment, the method further comprises, in response to the obtaining 306 of information of a link failure of the first fronthaul link 165, obtaining 308 information of a total available capacity of the at least one second fronthaul link 167, and based on the obtained information of total available capacity, selecting 310 the third decoding scheme for the decoding of the first user plane data stream and selecting the fourth decoding scheme for the decoding of the second user plane data stream.

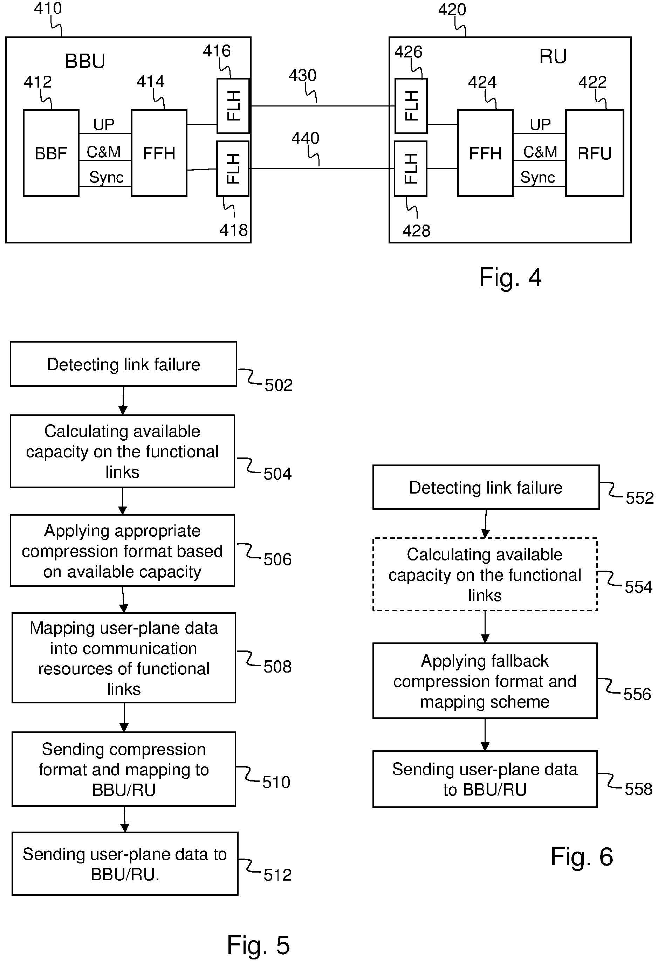

Fig. 4 shows an embodiment of an architecture of a distributed base station system in which the present invention may be used. The described architecture comprises a BBU 410 and an RU 420. The BBU 410 and the RU 420 are interconnected by a first and a second fronthaul link 430, 440. In this case there are two fronthaul links but the idea supports any number of fronthaul links more than one. Also note that the terms Baseband Unit and Radio Unit does not limit the distributed base station system architecture and all possible functional splits could be supported.

The BBU 410 comprises a baseband function (BBF) unit 412, a fronthaul format handler (FFH) 414 and one fronthaul link handler (FLH) 416, 418 per fronthaul link. The RU 420 comprises a radio function (RFU) unit 422, a fronthaul format handler (FFH) 424 and also one fronthaul link handler (FLH) 426, 428 per fronthaul link. The BBF 412 contains regular functions of the BBU, which may include signal modulation/demodulation, encoding/decoding, Fast Fourier Transforms etc. and also higher layer functionality such as scheduling, such as node handling, signal processing etc., and for simplicity all of this has been grouped into one functional block. Note though that in some architectures some of these functions, e.g. the Fast Fourier Transform operations, might be placed in the RFU. In a similar way the RFU 422 may contain functions such as Digital-to-Analog Conversion/Analog-to-Digital Conversion (DAC/ADC) as well as a Radio Frequency Front-End where the signal is transformed to a radio frequency. Synchronization information, Control & Management (C&M) data and user plane data, as a digitalized baseband signal, are then sent from the BBF to the fronthaul functional blocks 414, 416, 418. Note that this invention focusses on the handling of the user plane data. Synchronization information and C&M data can be handled by existing solutions e.g. by using the passive link functions as described by CPRI.

The fronthaul functional blocks at each of the BBU and the RRU consist of two functional block types; the FFH 414, 424 and the FLH 416, 418, 426, 428 per fronthaul link. The FLH 416, 418, 426, 428 sets up the physical fronthaul link and defines a communication resource format according to a standard, e.g. CPRI. The FFH 414, 424 gets the user plane data from the baseband/radio functions 412, 422 and then converts this user plane data into to an appropriate format for the capacity of the fronthaul link that fits the communication resource structure. The FFH 414, 424 can use different types of data formats such as e.g. block floating point and also different types of compression schemes. The FFH 414, 424 then distributes the mapped data into the different available fronthaul links out of the links 430, 440.

Fig. 5, in conjunction with fig. 4 shows a flow chart of an embodiment of a method performed by the BBU 410, in case of downlink communication, and performed by the RU 420, in case of uplink communication. The method starts with detecting 502 link failure of the first fronthaul link 430. Detecting can be done in several different ways. One option is to use physical layer alarms such as alarms defined by CPRI, e.g. Loss of Signal (LOS). Another option is to monitor the data received at the receiving unit of the BBU and the RU and trigger an alarm when data is missing e.g. by detecting very high number of code violations. An alarm signal is then sent by the receiving unit to the transmitting unit of the BBU and the RU. The detection 502 of link failure triggers the FFH 414, 424 to put the user plane data into the functional links, i.e. second fronthaul link 420, instead of into the broken first fronthaul link 430. The first step then is to calculate 504 how much capacity is available on the functional links. When it is known how much capacity that is available to transport the configured radio bandwidth (antennas x total carrier bandwidth), an appropriate compression format is applied 506 based on the available capacity. In other words, a compression format is applied 506 that has a data rate adapted to the available capacity. Compression methods could be e.g. re-quantization and resampling, however, the type of compression used is not limited in this method.

Finally, when a suitable compression format has been applied 506, the user plane data will be mapped 508 into communication resources of the functional links. The selected compression format and communication resource mapping is then sent 510 to the RU for downlink communication and to the BBU for uplink communication so that the link can be established again. The compression format and communication resource mapping may be sent over the C&M channel. Thereafter, user plane data is sent 512 using the selected compression format and mapping. It is advised to also alarm the link failure and change of fronthaul scheme to an appropriate management system, such as an OSS system so that a root-cause analysis of the link failure can be initiated.

When the mapping has been done, the fronthaul format handler at the sending unit can decide if it should re-configure the fronthaul link handler or not. If the communication resource structure fits with the targeted mapping scheme, the functional fronthaul link can stay synchronized and thus the fronthaul link handler can stay unchanged except for the potential action related to sync and C&M. This procedure can be done more or less momentarily when the link fault has been detected.

If supported by the hardware and the fronthaul format handler finds it efficient it is also possible to request a re-establishment of the link with a new communication resource mapping scheme. Note though that this will cause a larger interruption and might impact radio performance for the time it takes to reestablish the link. Also note that for Ethernet-based fronthaul interfaces a re-establishment is not needed since the bit rate and synchronization is not directly related to the Ethernet configuration.

Note that different types of encoding schemes and mapping schemes might induce different delays into the system. If the delay is changed, the fronthaul format handler could send information about the new delay to all timing-related functions, such as e.g. timing advance algorithms, in order for the timing-related functions to work properly. An alternative method would be to account for the highest delay possible for all possible encoding and mapping schemes. For a mapping scheme with lower delays increased buffering will then be used for reaching the targeted delay. In this way, update of timing is not needed when a remapping occurs. However, the penalty is that some additional delay is introduced for most of the mapping schemes.

For implementation purposes it might be preferred to use a less dynamic and flexible selection of encoding and mapping schemes. One or more different compression formats and mapping schemes can then be pre-configured so that the BBU and RU knows in advance how to act if a fronthaul link fails. Then the step of sending the new format and mapping scheme can be skipped since the other node already knows which format to use, or it can at least be simplified to very basic co-ordination information.

An embodiment for using a pre-configured fallback compression format and mapping is shown in fig. 6. The method comprises detecting 552 link failure of the first fronthaul link, applying 556 the fallback compression format and the fallback mapping scheme and sending 558 the user plane data to the BBU/RU using the fallback compression format and mapping. In case there are more than one preconfigured fallback compression formats and mapping schemes depending on how much communication resources that are lost, the method may also comprise a step of calculating the available capacity on the functional links.

To exemplify the use of embodiments of the present invention, a scenario with one BBU connected with two 9.8 Gbps CPRI fronthaul links to one RU with 8 antennas is considered. The example is shown for downlink communication but is also applicable to uplink communication. The user plane data is here called IQ data or IQ samples. The RU is sending two 20 MHz carriers over the air interface towards the wireless devices, and for the fronthaul interface a format of 30 bits per IQ sample with an IQ sample rate of 30.72 Mbps is used as default format. Each CPRI link carries 16 CPRI words, out of which the first word (w=0) is used for C&M and the other 15 words are used for user plane data, With the configured format a total of 30 CPRI words carrying AxC containers are needed to transport the IQ data according to the calculation below.

$$Utilized\ CPRI\ words$$
$$= \frac{\#Carriers\ \times\ \#Antennas\ \times Sample\ Rate\ \times\ \#bits\ \times\ \#CPRI\ words\ per\ link}{Link\ rate\ \times\ Coding\ rate}$$

$$= \frac{2\ \times\ 8\ \times 30.72M\ \times\ 30\ \times 16}{9830.4M\ \times\ \frac{8}{10}} = 30$$

The IQ data is mapped into the AxC containers of the CPRI words so that the signals for a first of the two carriers for the 8 antennas are transported in CPRI word 1-15 of the first of the two links and the signals for the second carrier are transported in CPRI word 1-15 of the second of the two links.

Suddenly the second link fails and hence the second carrier is dropped. The proposed method is then triggered and now only the capacity of the first link is available and thus the IQ data need to fit into the 15 CPRI words of the first link. To fit this, both resampling and re-quantization is applied. By changing format to 20 bits per IQ sample at 23.04 Mbps only 15 CPRI words are needed.

$$\frac{2\ \times\ 8\ \times 23.04M\ \times\ 20\ \times 16}{9830.4M\ \times\ \frac{8}{10}} = 15$$

With this format, the IQ data can be remapped so that the user plane data for the first carrier for the 8 antennas are mapped into the AxC containers of CPRI words 1-8 (the first half of word 8 is utilized) of the first link and the user plane data for the second carrier are mapped into the AxC containers of CPRI word 8-15 of the first link. The new format is signaled from the BBU to the RU so that a connection can be established over the first link for the second carrier and the user plane data for the second carrier can be sent over the first link instead of the second link that failed.

If the same example is used for the pre-configured fallback option the format and mapping would be as follows:

- Default scheme: 30 bit@30.72 Mbps. Carrier#1antenna1-8 -> CPRI words 1-15 of link 1. Carrier#2antenna1-8 -> CPRI words 1-15 of link 2.
- Fallback scheme: 20 bit@23.04 Mbps. Carrier#1antenna1-8 -> CPRI words 1-8 of functional link. Carrier#2antenna1-8 -> CPRI words 8-15 of functional link.

In this approach both the BBU and the RU detect link failure independently and as soon this happens they switch to the fallback scheme. Alternatively, the BBU can send a "switch to fallback mode" signal to the RU so that they can change scheme synchronously at a known radio frame. Note that the example above is intended to aid understanding of the concept. The performance difference between the two schemes in the example is quite small and probably the fallback scheme would be used all the time if available. In practice the presented concept would introduce more advanced data formats and compression schemes where the fallback scheme might have a more lossy impact on the performance.

Another scenario might be to have two 100 MHz carriers for 8 antennas with a sampling rate of 115.2 MHz transported over two 25G CPRI links. The default and fallback schemes might then be.

- Default scheme: 20 bit@115.2 Mbps. Carrier#1antenna1-8 -> CPRI words 1-13 of link 1. Carrier#2antenna1-8 -> CPRI words 1-13 of link 2.
- Fallback scheme: 12 bit@115.2 Mbps. Carrier#1antenna1-8 -> CPRI words 1-8 (half of word 8) of functional link. Carrier#2antenna1-8 -> CPRI words 8-15 (half of word 8) of functional link.

With this fallback scheme the reduced number of bits will lead to quantization noise that likely will impact 256 QAM performance. However, this is better than losing the whole carrier and is acceptable as fallback until the reason for link failure has been resolved.

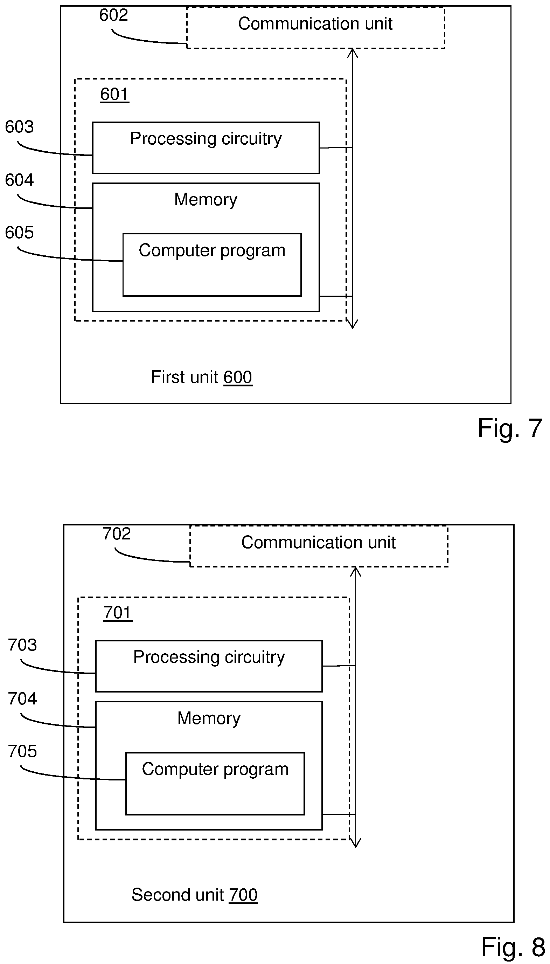

Fig. 7, in conjunction with fig. 1, describes a first unit 600 operable in a base station system 100 of a wireless communication network, for handling user plane data streams for transmission over fronthaul links between the first unit and a second unit of the base station system. The base station system comprises a baseband unit 170 and a radio unit 160. The radio unit 160 is arranged to transmit the user plane data streams wirelessly to, and receive from, one or more wireless communication devices 180. Either the first unit is the baseband unit 170 and the second unit is the radio unit 160, or the first unit is the radio unit 160 and the second unit is the baseband unit 170. The first unit 600 comprises a processing circuitry 603 and a memory 604. Said memory contains instructions executable by said processing circuitry, whereby the first unit 600 is operative for transmitting a first user plane data stream to the second unit over a first fronthaul link 165, the first user plane data stream being encoded with a first encoding scheme resulting in a first data rate, and transmitting a second user plane data stream to the second unit over at least one second fronthaul link 167, the second user plane data stream being encoded with a second encoding scheme resulting in a second data rate. the first unit is further operative for obtaining information of a link failure of the first fronthaul link 165, and in response to the obtained information of the link failure, and when the first and the second user plane data streams do not fit into the at least one second fronthaul link 167 encoded with the first and the second encoding scheme, respectively, transmitting, to the second unit over first communication resources of the at least one second fronthaul link 167, the first user plane data stream encoded with a third encoding scheme resulting in a third data rate, and transmitting, to the second unit over second communication resources of the at least one second fronthaul link 167, the second user plane data stream encoded with a fourth encoding scheme resulting in a fourth data rate, wherein at least one of the third data rate is lower than the first data rate, and the fourth data rate is lower than the second data rate.

According to an embodiment, the first unit 600 is further operative for, in response to obtaining information of a link failure of the first fronthaul link 165, obtaining information of a total available capacity of the at least one second fronthaul link 167, and, based on the obtained information of total available capacity, selecting the third encoding scheme for the first user plane data stream and the fourth encoding scheme for the second user plane data stream.

According to another embodiment, the first unit is operative for selecting the third encoding scheme out of one or more encoding schemes that are pre-known to the first and the second unit, and for selecting the fourth encoding scheme out of one or more encoding schemes that are pre-known to the first and the second unit.

According to another embodiment, the first unit is further operative for:

determining a maximum data rate for the first user data stream based on the information of the total available capacity, wherein the first unit is operative for selecting the third encoding scheme and consequently the third data rate based on the determined maximum data rate for the first user data stream, wherein the third data rate is lower than or the same as the maximum data rate for the first user data stream, and
determining a maximum data rate for the second user data stream based on the information of the total available capacity and the third data rate, wherein the first unit is operative for selecting the fourth encoding scheme and consequently the fourth data rate based on the determined maximum data rate for the second user data stream, wherein the fourth data rate is lower than or the same as the maximum data rate for the second user data stream.

According to another embodiment, the first unit is further operative for transmitting information indicating the third encoding scheme and the fourth encoding scheme to the second unit.

According to another embodiment, the first unit is further operative for mapping the first user plane data stream encoded with the third encoding scheme into the first communication resources of the at least one second fronthaul link according to a third mapping scheme, and mapping the second user plane data stream encoded with the fourth encoding scheme into the second communication resources of the at least one second fronthaul link according to a fourth mapping scheme.

According to another embodiment, the first unit is further operative for transmitting information indicating the third mapping scheme and the fourth mapping scheme to the second unit.

According to another embodiment, the first unit is further operative for, when the third encoding scheme induces a different delay than the first encoding scheme for the first user plane data stream, or the fourth encoding scheme induces a different delay than the second encoding scheme for the second user plane data stream, adapting timing related functions of the first unit and/or the second unit to the induced different delay.

According to other embodiments, the first unit 600 may further comprise a communication unit 602, which, in case the first unit is the RU 160 may be considered to comprise conventional means for wireless communication with the wireless devices 180, such as a transceiver for wireless transmission and reception of signals. The communication unit 602 may also comprise conventional means for communication with the second unit 700, and, in case the first unit 600 is the BBU 170 with other radio access network nodes of the wireless communication network 100. The instructions executable by said processing circuitry 603 may be arranged as a computer program 605 stored e.g. in said memory 604. The processing circuitry 603 and the memory 604 may be arranged in a sub-arrangement 601. The sub-arrangement 601 may be a micro-processor and adequate software and storage therefore, a Programmable Logic Device, PLD, or other electronic component(s)/processing circuit(s) configured to perform the methods mentioned above. The processing circuitry 603 may comprise one or more programmable processor, application-specific integrated circuits, field programmable gate arrays or combinations of these adapted to execute instructions.

The computer program 605 may be arranged such that when its instructions are run in the processing circuitry, they cause the first unit 600 to perform the steps described in any of the described embodiments of the first unit 600 and its method. The computer program 605 may be carried by a computer program product connectable to the processing circuitry 603. The computer program product may be the memory 604, or at least arranged in the memory. The memory 604 may be realized as for example a RAM (Random-access memory), ROM (Read-Only Memory) or an EEPROM (Electrical Erasable Programmable ROM). Further, the computer program 605 may be carried by a separate computer-readable medium, such as a CD, DVD or flash memory, from which the program could be downloaded into the memory 604. Alternatively, the computer program may be stored on a server or any other entity to which the first unit 600 has access via the communication unit 602. The computer program 605 may then be downloaded from the server into the memory 604.

Fig. 8, in conjunction with fig. 1, describes a second unit 700 operable in a base station system 100 of a wireless communication network, for handling user plane data streams for transmission over fronthaul links between the second unit and a first unit of the base station system. The base station system comprises a baseband unit 170 and a radio unit 160. The radio unit 160 is arranged to transmit the user plane data streams wirelessly to, and receive from, one or more wireless communication devices 180. Either the first unit is the baseband unit 170 and the second unit is the radio unit 160, or the first unit is the radio unit 160 and the second unit is the baseband unit 170. The second unit 700 comprises a processing circuitry 703 and a memory 704. Said memory contains instructions executable by said processing circuitry, whereby the second unit 700 is operative for receiving a first user plane data stream from the first unit over a first fronthaul link 165, the first user plane data stream being encoded with a first encoding scheme resulting in a first data rate, and receiving a second user plane data stream from the first unit over at least one second fronthaul link 167, the second user plane data stream being encoded with a second encoding scheme resulting in a second data rate. the second unit 700 is further operative for obtaining information of a link failure of the first fronthaul link 165, and, in response to the obtained information of the link failure, and when the first and the second user plane data streams do not fit into the at least one second fronthaul link 167 encoded with the first and the second encoding scheme, respectively, receiving, from the first unit over first communication resources of the at least one second fronthaul link 167, the first user plane data stream encoded with a third encoding scheme resulting in a third data rate, and receiving, from the first unit over second communication resources of the at least one second fronthaul link 167, the second user plane data stream encoded with a fourth encoding scheme resulting in a fourth data rate, wherein at least one of the third data rate is lower than the first data rate, and the fourth data rate is lower than the second data rate.

According to an embodiment, the second unit 700 is further operative for decoding the first user plane data stream using a third decoding scheme corresponding to the third encoding scheme, and decoding the second user plane data stream using a fourth decoding scheme corresponding to the fourth encoding scheme.

According to another embodiment, the second unit 700 is further operative for receiving, from the first unit, information indicating the third encoding scheme and the fourth encoding scheme.

According to another embodiment, the second unit 700 is further operative for de-mapping the first user plane data stream encoded with the third encoding scheme according to a de-mapping scheme that corresponds to a mapping scheme used at the first unit for mapping the first user plane data into the first communication resources of the at least one second fronthaul link, and demapping the second user plane data stream encoded with the fourth encoding scheme according to a de-mapping scheme that corresponds to a mapping scheme used at the first unit for mapping the second user plane data into the second communication resources of the at least one second fronthaul link.

According to another embodiment, the second unit 700 is further operative for receiving, from the first unit, information indicating the third mapping scheme and the fourth mapping scheme.

According to another embodiment, the second unit 700 is further operative for, in response to the obtaining of information of a link failure of the first fronthaul link 165, obtaining information of a total available capacity of the at least one second fronthaul link 167, and, based on the obtained information of total available capacity, selecting the third decoding scheme for the decoding of the first user plane data stream and selecting the fourth decoding scheme for the decoding of the second user plane data stream.

According to other embodiments, the second unit 700 may further comprise a communication unit 702, which, in case the second unit is the RU 160 may be considered to comprise conventional means for wireless communication with the wireless devices 180, such as a transceiver for wireless transmission and reception of signals. The communication unit 702 may also comprise conventional means for communication with the first unit 700, and, in case the second unit 700 is the BBU 170 with other radio access network nodes of the wireless communication network 100. The instructions executable by said processing circuitry 703 may be arranged as a computer program 705 stored e.g. in said memory 704. The processing circuitry 703 and the memory 704 may be arranged in a sub-arrangement 701. The sub-arrangement 701 may be a micro-processor and adequate software and storage therefore, a Programmable Logic Device, PLD, or other electronic component(s)/processing circuit(s) configured to perform the methods mentioned above. The processing circuitry 703 may comprise one or more programmable processor, application-specific integrated circuits, field programmable gate arrays or combinations of these adapted to execute instructions.

The computer program 705 may be arranged such that when its instructions are run in the processing circuitry, they cause the second unit 700 to perform the steps described in any of the described embodiments of the second unit 700 and its method. The computer program 705 may be carried by a computer program product connectable to the processing circuitry 703. The computer program product may be the memory 704, or at least arranged in the memory. The memory 704 may be realized as for example a RAM (Random-access memory), ROM (Read-Only Memory) or an EEPROM (Electrical Erasable Programmable ROM). Further, the computer program 705 may be carried by a separate computer-readable medium, such as a CD, DVD or flash memory, from which the program could be downloaded into the memory 704. Alternatively, the computer program may be stored on a server or any other entity to which the second unit 700 has access via the communication unit 702. The computer program 705 may then be downloaded from the server into the memory 704. |

Although the description above contains a plurality of specificities, these should not be construed as limiting the scope of the invention described herein but as merely providing illustrations of some exemplifying embodiments of the described invention. Reference to an element in the singular is not intended to mean "one and only one" unless explicitly so stated, but rather "one or more." Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a first unit of a base station system (100) of a wireless communication network, for handling user plane data streams for transmission over fronthaul links between the first unit and a second unit of the base station system, the base station system comprising a baseband unit (170) and a radio unit (160), the radio unit (160) being arranged to transmit the user plane data streams wirelessly to, and receive from, one or more wireless communication devices (180), wherein the first unit is the baseband unit (170) and the second unit is the radio unit (160), or wherein the first unit is the radio unit (160) and the second unit is the baseband unit (170), the method comprising:

   transmitting (202) a first user plane data stream to the second unit over a first fronthaul link (165), the first user plane data stream being encoded with a first encoding scheme resulting in a first data rate;
   transmitting (204) a second user plane data stream to the second unit over at least one second fronthaul link (167), the second user plane data stream being encoded with a second encoding scheme resulting in a second data rate;
   obtaining (206) information of a link failure of the first fronthaul link (165), and
   in response to the obtained information of the link failure, and when the first and the second user plane data streams do not fit into the at least one second fronthaul link (167) encoded with the first and the second encoding scheme, respectively, **characterized by** transmitting (212), to the second unit over first communication resources of the at least one second fronthaul link (167), the first user plane data stream encoded with a third encoding scheme resulting in a third data rate, and transmitting (214), to the second unit over second communication resources of the at least one second fronthaul link (167), the second user plane data stream encoded with a fourth encoding scheme resulting in a fourth data rate, wherein at least one of the third data rate is lower than the first data rate, and the fourth data rate is lower than the second data rate.

2. Method according to claim 1, further comprising:

in response to the obtaining (206) of information of a link failure of the first fronthaul link (165), obtaining (207) information of a total available capacity of the at least one second fronthaul link (167), and
based on the obtained information of total available capacity, selecting (208) the third encoding scheme for the first user plane data stream and the fourth encoding scheme for the second user plane data stream.

3. Method according to claim 2, wherein the third encoding scheme is selected (208) out of one or more encoding schemes that are pre-known to the first and the second unit, and wherein the fourth encoding scheme is selected out of one or more encoding schemes that are pre-known to the first and the second unit.

4. Method according to claim 2, further comprising:

determining (218) a maximum data rate for the first user data stream based on the information of the total available capacity, and wherein the selecting (208) of the third encoding scheme and consequently the third data rate is performed based on the determined maximum data rate for the first user data stream, wherein the third data rate is lower than or the same as the maximum data rate for the first user data stream, and
determining (219) a maximum data rate for the second user data stream based on the information of the total available capacity and the third data rate, and wherein the selecting (208) of the fourth encoding scheme and consequently the fourth data rate is performed based on the determined maximum data rate for the second user data stream, wherein the fourth data rate is lower than or the same as the maximum data rate for the second user data stream.

5. Method according to any of the preceding claims, further comprising:
transmitting (210) information indicating the third encoding scheme and the fourth encoding scheme to the second unit.

6. Method according to any of the preceding claims, further comprising:

mapping the first user plane data stream encoded with the third encoding scheme into the first communication resources of the at least one second fronthaul link according to a third mapping scheme, and
mapping the second user plane data stream encoded with the fourth encoding scheme into the second communication resources of the at least one second fronthaul link according to a fourth mapping scheme, the method further comprising:
transmitting information indicating the third mapping scheme and the fourth mapping scheme to the second unit.

7. A method performed by a second unit of a base station system (100) of a wireless communication network, for handling user plane data streams for transmission over fronthaul links between the second unit and a first unit of the base station system, the base station system comprising a baseband unit (170) and a radio unit (160), the radio unit (160) being arranged to transmit the user plane data streams wirelessly to, and receive from, one or more wireless communication devices (180), wherein the first unit is the baseband unit (170) and the second unit is the radio unit (160), or wherein the first unit is the radio unit (160) and the second unit is the baseband unit (170), the method comprising:

receiving (302) a first user plane data stream from the first unit over a first fronthaul link (165), the first user plane data stream being encoded with a first encoding scheme resulting in a first data rate;
receiving (304) a second user plane data stream from the first unit over at least one second fronthaul link (167), the second user plane data stream being encoded with a second encoding scheme resulting in a second data rate;
obtaining (306) information of a link failure of the first fronthaul link (165), and
in response to the obtained information of the link failure, and when the first and the second user plane data streams do not fit into the at least one second fronthaul link (167) encoded with the first and the second encoding scheme, respectively, **characterized by** receiving (314), from the first unit over first communication resources of the at least one second fronthaul link (167), the first user plane data stream encoded with a third encoding scheme resulting in a third data rate, and receiving (316), from the first unit over second communication resources of the at least one second fronthaul link (167), the second user plane data stream encoded with a fourth encoding scheme resulting in a fourth data rate, wherein at least one of the third data rate is lower than the first data rate, and the fourth data rate is lower than the second data rate,

the method further comprising:

decoding (318) the first user plane data stream using a third decoding scheme corresponding to the third encoding scheme, and
decoding (320) the second user plane data stream using a fourth decoding scheme corresponding to the fourth encoding scheme.

8. Method according to claim 7, further comprising:
receiving (312), from the first unit, information indicating the third encoding scheme and the fourth encoding scheme.

9. Method according to any of claims 7-8, further comprising:

de-mapping the first user plane data stream encoded with the third encoding scheme according to a de-mapping scheme that corresponds to a mapping scheme used at the first unit for mapping the first user plane data into the first communication resources of the at least one second fronthaul link, and
de-mapping the second user plane data stream encoded with the fourth encoding scheme according to a de-mapping scheme that corresponds to a mapping scheme used at the first unit for mapping the second user plane data into the second communication resources of the at least one second fronthaul link, the method further comprising:
receiving, from the first unit, information indicating the third mapping scheme and the fourth mapping scheme.

10. Method according to any of claims 7-9, further comprising:

in response to the obtaining (306) of information of a link failure of the first fronthaul link (165), obtaining (308) information of a total available capacity of the at least one second fronthaul link (167), and
based on the obtained information of total available capacity, selecting (310) the third decoding scheme for the decoding of the first user plane data stream and selecting the fourth decoding scheme for the decoding of the second user plane data stream.

11. A unit (600, 700) adapted to perform the method of any of the preceding claims.

12. A system comprising a first unit and a second unit connected to one another, the first unit being adapted to perform the method of any of the claims 1-6 and the second unit being adapted to perform the method of any of the claims 7-10.

13. A computer program (605) comprising instructions, which, when executed by at least one processing circuitry of a unit (600, 700) of a base station system (100) configured for handling user plane data streams for transmission over fronthaul links between a first unit and a second unit of the base station system, the base station system comprising a baseband unit (170) and a radio unit (160), the radio unit (160) being arranged to transmit the user plane data streams wirelessly to, and receive from, one or more wireless communication devices (180), cause the unit (600, 700) to perform the method of any of the claims 1-10.

14. A carrier containing the computer program (605) according to claim 13, wherein the carrier is one of an electronic signal, optical signal, radio signal or computer readable storage medium.

**Patentansprüche**

1. Verfahren, das von einer ersten Einheit eines Basisstationssystems (100) eines drahtlosen Kommunikationsnetzes zum Handhaben von Datenströmen auf Benutzerebene zur Übertragung über Fronthaul-Verbindungen zwischen der ersten Einheit und einer zweiten Einheit des Basisstationssystems durchgeführt wird, wobei das Basisstationssystem eine Basisbandeinheit (170) und eine Funkeinheit (160) umfasst, wobei die Funkeinheit (160) angeordnet ist, um die Datenströme auf Benutzerebene drahtlos an eine oder mehrere drahtlose Kommunikationsvorrichtungen (180) zu übertragen und von diesen zu empfangen, wobei die erste Einheit die Basisbandeinheit (170) ist und die zweite Einheit die Funkeinheit (160) ist, oder wobei die erste Einheit die Funkeinheit (160) ist und die zweite Einheit die Basisbandeinheit (170) ist, wobei das Verfahren Folgendes umfasst: Übertragen (202) eines ersten Datenstroms auf Benutzerebene an die zweite Einheit über eine erste Fronthaul-Verbindung (165), wobei der erste Datenstrom auf Benutzerebene mit einem ersten Codierschema, das zu einer ersten Datenrate führt, codiert ist;

Übertragen (204) eines zweiten Datenstroms auf Benutzerebene an die zweite Einheit über mindestens eine zweite Fronthaul-Verbindung (167), wobei der zweite Datenstrom auf Benutzerebene mit einem zweiten Codierschema codiert ist, das zu einer zweiten Datenrate führt;

Erhalten (206) von Informationen eines Verbindungsfehlers der ersten Fronthaul-Verbindung (165), und als Reaktion auf die erhaltenen Informationen des Verbindungsfehlers, und wenn der erste und der zweite Datenstrom auf Benutzerebene nicht in die mindestens eine zweite Fronthaul-Verbindung (167) passen, die mit dem ersten bzw. dem zweiten Codierschema codiert ist, **gekennzeichnet durch** Übertragen (212), an die zweite Einheit über erste Kommunikationsressourcen der mindestens einen zweiten Fronthaul-Verbindung (167), wobei der erste Datenstrom auf Benutzerebene mit einem dritten Codierschema codiert ist, das zu einer dritten Datenrate führt, und Übertragen (214), an die zweite Einheit über zweite Kommunikationsressourcen der mindestens einen zweiten Fronthaul-Verbindung (167), wobei der zweite Datenstrom auf Benutzerebene mit einem vierten Codierschema codiert ist, das zu einer vierten Datenrate führt, wobei mindestens eine der dritten Datenrate niedriger als die erste Datenrate ist und die vierte Datenrate niedriger als die zweite Datenrate ist.

2. Verfahren nach Anspruch 1, ferner umfassend:

als Reaktion auf das Erhalten (206) von Informationen eines Verbindungsfehlers der ersten Fronthaul-Verbindung (165), Erhalten (207) von Informationen einer gesamten verfügbaren Kapazität der mindestens einen zweiten Fronthaul-Verbindung (167), und

basierend auf den erhaltenen Informationen der gesamten verfügbaren Kapazität, Auswählen (208) des dritten Codierschemas für den ersten Datenstrom auf Benutzerebene und des vierten Codierschemas für den zweiten Datenstrom auf Benutzerebene.

3. Verfahren nach Anspruch 2, wobei das dritte Codierschema aus einem oder mehreren Codierschemata ausgewählt wird (208), die der ersten und der zweiten Einheit vorbekannt sind, und wobei das vierte Codierschema aus einem oder mehreren Codierschemata ausgewählt wird, die der ersten und der zweiten Einheit vorbekannt sind.

4. Verfahren nach Anspruch 2, ferner umfassend:

Bestimmen (218) einer maximalen Datenrate für den ersten Benutzerdatenstrom basierend auf den Informationen der gesamten verfügbaren Kapazität, und wobei das Auswählen (208) des dritten Codierschemas und folglich der dritten Datenrate basierend auf der bestimmten maximalen Datenrate für den ersten Benutzerdatenstrom durchgeführt wird, wobei die dritte Datenrate niedriger als oder gleich der maximalen Datenrate für den ersten Benutzerdatenstrom ist, und

Bestimmen (219) einer maximalen Datenrate für den zweiten Benutzerdatenstrom basierend auf den Informationen der gesamten verfügbaren Kapazität und der dritten Datenrate, und wobei das Auswählen (208) des vierten Codierschemas und folglich der vierten Datenrate basierend auf der bestimmten maximalen Datenrate für den zweiten Benutzerdatenstrom durchgeführt wird, wobei die vierte Datenrate niedriger als oder gleich der maximalen Datenrate für den zweiten Benutzerdatenstrom ist.

5. Verfahren nach einem der vorstehenden Ansprüche, ferner umfassend:
Übertragen (210) von Informationen, die das dritte Codierschema und das vierte Codierschema an die zweite Einheit angeben.

6. Verfahren nach einem der vorstehenden Ansprüche, ferner umfassend:

Mapping des ersten Datenstroms auf Benutzerebene, der mit dem dritten Codierschema codiert ist, in die ersten Kommunikationsressourcen der mindestens einen zweiten Fronthaul-Verbindung gemäß einem dritten Mapping-Schema, und

Mapping des zweiten Datenstroms auf Benutzerebene, der mit dem vierten Codierschema codiert ist, in die zweiten Kommunikationsressourcen der mindestens einen zweiten Fronthaul-Verbindung gemäß einem vierten Mapping-Schema, wobei das Verfahren ferner Folgendes umfasst:

Übertragen von Informationen, die das dritte Mapping-Schema und das vierte Mapping-Schema an die zweite Einheit angeben.

**7.** Verfahren, das durch eine zweite Einheit eines Basisstationssystems (100) eines drahtlosen Kommunikationsnetzes zum Handhaben von Datenströmen auf Benutzerebene zur Übertragung über Fronthaul-Verbindungen zwischen der zweiten Einheit und einer ersten Einheit des Basisstationssystems durchgeführt wird, wobei das Basisstationssystem eine Basisbandeinheit (170) und eine Funkeinheit (160) umfasst, wobei die Funkeinheit (160) angeordnet ist, um die Datenströme auf Benutzerebene drahtlos an eine oder mehrere drahtlose Kommunikationsvorrichtungen (180) zu übertragen und von diesen zu empfangen, wobei die erste Einheit die Basisbandeinheit (170) ist und die zweite Einheit die Funkeinheit (160) ist, oder wobei die erste Einheit die Funkeinheit (160) und die zweite Einheit die Basisbandeinheit (170) ist, wobei das Verfahren Folgendes umfasst:

Empfangen (302) eines ersten Datenstroms auf Benutzerebene von der ersten Einheit über eine erste Fronthaul-Verbindung (165), wobei der erste Datenstrom auf Benutzerebene mit einem ersten Codierschema codiert ist, das zu einer ersten Datenrate führt;
Empfangen (304) eines zweiten Datenstroms auf Benutzerebene von der ersten Einheit über mindestens eine zweite Fronthaul-Verbindung (167), wobei der zweite Datenstrom auf Benutzerebene mit einem zweiten Codierschema codiert ist, das zu einer zweiten Datenrate führt;
Erhalten (306) von Informationen eines Verbindungsfehlers der ersten Fronthaul-Verbindung (165), und
als Reaktion auf die erhaltenen Informationen des Verbindungsfehlers, und wenn der erste und der zweite Datenstrom auf Benutzerebene nicht in die mindestens eine zweite Fronthaul-Verbindung (167) passen, die mit dem ersten bzw. dem zweiten Codierschema codiert ist, **gekennzeichnet durch** Empfangen (314), von der ersten Einheit über erste Kommunikationsressourcen der mindestens einen zweiten Fronthaul-Verbindung (167), wobei der erste Datenstrom auf Benutzerebene mit einem dritten Codierschema codiert ist, das zu einer dritten Datenrate führt, und Empfangen (316), von der ersten Einheit über zweite Kommunikationsressourcen der mindestens einen zweiten Fronthaul-Verbindung (167), wobei der zweite Datenstrom auf Benutzerebene mit einem vierten Codierschema codiert ist, das zu einer vierten Datenrate führt, wobei mindestens eine der dritten Datenrate niedriger als die erste Datenrate ist, und die vierte Datenrate niedriger als die zweite Datenrate ist,
wobei das Verfahren ferner umfasst:

Decodieren (318) des ersten Datenstroms auf Benutzerebene unter Verwendung eines dritten Decodierschemas, das dem dritten Codierschema entspricht, und
Decodieren (320) des zweiten Datenstroms auf Benutzerebene unter Verwendung eines vierten Decodierschemas, das dem vierten Codierschema entspricht.

**8.** Verfahren nach Anspruch 7, ferner umfassend: Empfangen (312) von Informationen, die das dritte Codierschema und das vierte Codierschema angeben, von der ersten Einheit.

**9.** Verfahren nach einem der Ansprüche 7 bis 8, ferner umfassend:

Demapping des ersten Datenstroms auf Benutzerebene, der mit dem dritten Codierschema codiert ist, gemäß einem Demapping-Schema, das einem Mapping-Schema entspricht, das an der ersten Einheit zum Mapping der ersten Daten auf Benutzerebene in die ersten Kommunikationsressourcen der mindestens einen zweiten Fronthaul-Verbindung verwendet wird, und
Demapping des zweiten Datenstroms auf Benutzerebene, der mit dem vierten Codierschema codiert ist, gemäß einem Demapping-Schema, das einem Mapping-Schema entspricht, das an der ersten Einheit zum Mapping der zweiten Daten auf Benutzerebene in die zweiten Kommunikationsressourcen der mindestens einen zweiten Fronthaul-Verbindung verwendet wird, wobei das Verfahren ferner Folgendes umfasst:
Empfangen von Informationen von der ersten Einheit, die das dritte Mapping-Schema und das vierte Mapping-Schema angeben.

**10.** Verfahren nach einem der Ansprüche 7 bis 9, ferner umfassend:

als Reaktion auf das Erhalten (306) von Informationen eines Verbindungsfehlers der ersten Fronthaul-Verbindung (165), Erhalten (308) von Informationen einer gesamten verfügbaren Kapazität der mindestens einen zweiten Fronthaul-Verbindung (167), und
basierend auf den erhaltenen Informationen der gesamten verfügbaren Kapazität, Auswählen (310) des dritten Decodierschemas für das Decodieren des ersten Datenstroms auf Benutzerebene, und Auswählen des vierten Decodierschemas für das Decodieren des zweiten Datenstroms auf Benutzerebene.

**11.** Einheit (600, 700), die ausgelegt ist, um das Verfahren nach einem der vorstehenden Ansprüche durchzuführen.

**12.** System, umfassend eine erste Einheit und eine zweite Einheit, die miteinander verbunden sind, wobei die erste Einheit ausgelegt ist, um das Verfahren nach einem der Ansprüche 1 bis 6 durchzuführen, und die zweite Einheit ausgelegt ist, um das Verfahren nach einem der Ansprüche 7 bis 10 durchzuführen.

**13.** Computerprogramm (605), das Anweisungen umfasst, die, wenn sie von mindestens einer Verarbeitungsschaltlogik einer Einheit (600, 700) eines Basisstationssystems (100) ausgeführt werden, die zum Handhaben von Datenströmen auf Benutzerebene für die Übertragung über Fronthaul-Verbindungen zwischen einer ersten Einheit und einer zweiten Einheit des Basisstationssystems konfiguriert ist, wobei das Basisstationssystem eine Basisbandeinheit (170) und eine Funkeinheit (160) umfasst, wobei die Funkeinheit (160) angeordnet ist, um die Datenströme auf Benutzerebene drahtlos an eine oder mehrere drahtlose Kommunikationsvorrichtungen (180) zu übertragen und von dieser zu empfangen, veranlassen, dass die Einheit (600, 700) das Verfahren nach einem der Ansprüche 1 bis 10 durchführt.

**14.** Träger, der das Computerprogramm (605) nach Anspruch 13 enthält, wobei der Träger eines von einem elektronischen Signal, einem optischen Signal, einem Funksignal oder einem computerlesbaren Speichermedium ist.

**Revendications**

**1.** Procédé exécuté par une première unité d'un système de station de base (100) d'un réseau de communication sans fil, pour gérer des flux de données de plan utilisateur pour une transmission sur des liaisons de fronthaul entre la première unité et une deuxième unité du système de station de base, le système de station de base comprenant une unité de bande de base (170) et une unité radio (160), l'unité radio (160) étant agencée pour transmettre sans fil les flux de données de plan utilisateur vers, et recevoir depuis, un ou plusieurs dispositifs de communication sans fil (180), la première unité étant l'unité de bande de base (170) et la deuxième unité étant l'unité radio (160), ou la première unité étant l'unité radio (160) et la deuxième unité étant l'unité de bande de base (170), le procédé comprenant les étapes consistant à :

transmettre (202) un premier flux de données de plan utilisateur à la deuxième unité sur une première liaison de fronthaul (165), le premier flux de données de plan utilisateur étant codé avec un premier schéma de codage résultant en un premier débit de données ;
transmettre (204) un deuxième flux de données de plan utilisateur à la deuxième unité sur au moins une deuxième liaison de fronthaul (167), le deuxième flux de données de plan utilisateur étant codé avec un deuxième schéma de codage résultant en un deuxième débit de données ;
obtenir (206) des informations d'une défaillance de liaison de la première liaison de fronthaul (165), et
en réponse aux informations obtenues portant sur la défaillance de la liaison, et lorsque les premier et deuxième flux de données de plan utilisateur ne s'intègrent pas dans au moins une deuxième liaison de fronthaul (167) codée avec respectivement le premier et le deuxième schéma de codage,
caractérisé par la transmission (212), à la deuxième unité sur des premières ressources de communication de l'au moins une deuxième liaison de fronthaul (167), le premier flux de données de plan utilisateur codé avec un troisième schéma de codage résultant en un troisième débit de données, et la transmission (214), à la deuxième unité sur des deuxièmes ressources de communication de l'au moins une deuxième liaison de fronthaul (167), le deuxième flux de données de plan utilisateur étant codé avec un quatrième schéma de codage résultant en un quatrième débit de données, dans lequel au moins l'un des troisièmes débits de données est inférieur au premier débit de données, et le quatrième débit de données est inférieur au deuxième débit de données.

**2.** Procédé selon la revendication 1, comprenant en outre :

en réponse à l'obtention (206) d'informations d'une défaillance de liaison de la première liaison de fronthaul (165), l'obtention (207) d'informations d'une capacité disponible totale de l'au moins une deuxième liaison de fronthaul (167), et
sur la base des informations obtenues portant sur la capacité totale disponible, la sélection (208) du troisième schéma de codage pour le premier flux de données de plan utilisateur et le quatrième schéma de codage pour le deuxième flux de données de plan utilisateur.

**3.** Procédé selon la revendication 2, dans lequel le troisième schéma de codage est sélectionné (208) parmi un ou plusieurs schémas de codage qui sont pré-connus pour la première unité et la deuxième unité, et dans lequel le quatrième schéma de codage est sélectionné parmi un ou plusieurs schémas de codage qui sont pré-connus pour la première unité et la deuxième unité.

**4.** Procédé selon la revendication 2, comprenant en outre :

la détermination (218) d'un débit de données maximum pour le premier flux de données utilisateur sur la base des informations de la capacité totale disponible, et dans lequel la sélection (208) du troisième schéma de codage et par conséquent du troisième débit de données est effectuée sur la base du débit de données maximum déterminé pour le premier flux de données utilisateur, le troisième débit de données étant inférieur ou égal au débit de données maximum pour le premier flux de données utilisateur, et

la détermination (219) d'un débit de données maximum pour le deuxième flux de données utilisateur sur la base des informations de la capacité totale disponible et du troisième débit de données, et dans lequel la sélection (208) du quatrième schéma de codage et par conséquent du quatrième débit de données est effectuée sur la base du débit de données maximum déterminé pour le deuxième flux de données utilisateur, le quatrième débit de données étant inférieur ou égal au débit de données maximum pour le deuxième flux de données utilisateur.

**5.** Procédé selon l'une quelconque des revendications précédentes, comprenant en outre :
la transmission (210) d'informations indiquant le troisième schéma de codage et le quatrième schéma de codage à la deuxième unité.

**6.** Procédé selon l'une quelconque des revendications précédentes, comprenant en outre :

le mappage du premier flux de données de plan utilisateur codé avec le troisième schéma de codage dans les premières ressources de communication de l'au moins une deuxième liaison de fronthaul selon un troisième schéma de mappage, et

le mappage du deuxième flux de données de plan utilisateur codé avec le quatrième schéma de codage dans les deuxièmes ressources de communication de l'au moins une deuxième liaison de fronthaul selon un quatrième schéma de mappage, le procédé comprenant en outre :

la transmission d'informations indiquant le troisième schéma de mappage et le quatrième schéma de mappage à la deuxième unité.

**7.** Procédé exécuté par une deuxième unité d'un système de station de base (100) d'un réseau de communication sans fil, pour gérer des flux de données de plan utilisateur pour une transmission sur des liaisons de fronthaul entre la deuxième unité et une première unité du système de station de base, le système de station de base comprenant une unité de bande de base (170) et une unité radio (160), l'unité radio (160) étant agencée pour transmettre sans fil les flux de données de plan utilisateur vers, et recevoir depuis, un ou plusieurs dispositifs de communication sans fil (180), la première unité étant l'unité de bande de base (170) et la deuxième unité étant l'unité radio (160), ou la première unité étant l'unité radio (160) et la deuxième unité étant l'unité de bande de base (170), le procédé comprenant les étapes consistant à :

recevoir (302) un premier flux de données de plan utilisateur depuis la première unité sur une première liaison de fronthaul (165), le premier flux de données de plan utilisateur étant codé avec un premier schéma de codage résultant en un premier débit de données ;

recevoir (304) un deuxième flux de données de plan utilisateur depuis la première unité sur au moins une deuxième liaison de fronthaul (167), le deuxième flux de données de plan utilisateur étant codé avec un deuxième schéma de codage résultant en un deuxième débit de données ;

obtenir (306) des informations d'une défaillance de liaison de la première liaison de fronthaul (165), et

en réponse aux informations obtenues portant sur la défaillance de la liaison, et lorsque les premier et deuxième flux de données de plan utilisateur ne s'intègrent pas dans au moins une deuxième liaison de fronthaul (167) codée avec respectivement le premier et le deuxième schéma de codage, **caractérisé par** la réception (314), à partir de la première unité sur des premières ressources de communication de l'au moins une deuxième liaison de fronthaul (167), du premier flux de données de plan utilisateur codé avec un troisième schéma de codage résultant en un troisième débit de données, et la réception (316), à partir de la première unité sur des deuxièmes ressources de communication de l'au moins une deuxième liaison de fronthaul (167), du deuxième flux de données de plan utilisateur étant codé avec un quatrième schéma de codage résultant en un quatrième débit de données, dans lequel au moins l'un des troisièmes débits de données est inférieur au premier débit de données, et le quatrième débit de données est inférieur au deuxième débit de données,
le procédé comprenant en outre les étapes consistant à :

décoder (318) le premier flux de données de plan utilisateur en utilisant un troisième schéma de décodage correspondant au troisième schéma de codage, et
décoder (320) le deuxième flux de données de plan utilisateur en utilisant un quatrième schéma de décodage correspondant au quatrième schéma de codage.

**8.** Procédé selon la revendication 7, comprenant en outre :
la réception (312), depuis la première unité, d'informations indiquant le troisième schéma de codage et le quatrième schéma de codage.

**9.** Procédé selon l'une quelconque des revendications 7 à 8, comprenant en outre :

le démappage du premier flux de données de plan utilisateur codé avec le troisième schéma de codage selon un schéma de démappage qui correspond à un schéma de mappage utilisé au niveau de la première unité pour mapper les premières données de plan utilisateur dans les premières ressources de communication de l'au moins une deuxième liaison de fronthaul, et
le démappage du deuxième flux de données de plan utilisateur codé avec le quatrième schéma de codage selon un schéma de démappage qui correspond à un schéma de mappage utilisé au niveau de la première unité pour mapper les deuxièmes données de plan utilisateur dans les deuxièmes ressources de communication de l'au moins une deuxième liaison de fronthaul, le procédé comprenant en outre :
la réception, depuis la première unité, d'informations indiquant le troisième schéma de mappage et le quatrième schéma de mappage.

**10.** Procédé selon l'une quelconque des revendications 7 à 9, comprenant en outre :

en réponse à l'obtention (306) d'informations d'une défaillance de liaison de la première liaison de fronthaul (165), l'obtention (308) d'informations d'une capacité disponible totale de l'au moins une deuxième liaison de fronthaul (167), et
sur la base des informations obtenues portant sur la capacité totale disponible, la sélection (310) du troisième schéma de décodage pour le décodage du premier flux de données de plan utilisateur et la sélection du quatrième schéma de décodage pour le décodage du deuxième flux de données de plan utilisateur.

**11.** Unité (600, 700) adapté pour mettre en oeuvre le procédé selon l'une quelconque des revendications précédentes.

**12.** Système comprenant une première unité et une deuxième unité reliées l'une à l'autre, la première unité étant adaptée à l'exécution du procédé selon l'une quelconque des revendications 1 à 6, et la deuxième unité étant adaptée à l'exécution du procédé selon l'une quelconque des revendications 7 à 10.

**13.** Programme informatique (605) comprenant des instructions qui, lorsqu'elles sont exécutées par au moins un circuit de traitement d'une unité (600, 700) d'un système de station de base (100), configuré pour gérer des flux de données de plan utilisateur pour une transmission sur des liaisons de fronthaul entre une première unité et une deuxième unité du système de station de base, le système de station de base comprenant une unité de bande de base (170) et une unité radio (160), l'unité radio (160) étant agencée pour transmettre sans fil les flux de données de plan utilisateur vers, et recevoir depuis un ou plusieurs dispositifs de communication sans fil (180),
amènent l'unité (600, 700) à mettre en oeuvre le procédé selon l'une quelconque des revendications 1 à 10.

**14.** Porteuse contenant le programme informatique (605) selon la revendication 13, dans lequel la porteuse est l'un parmi un signal électronique, un signal optique, un signal radio ou un support de stockage lisible par ordinateur.

Fig. 1

Transmitting 1ˢᵗ data stream over
1ˢᵗ fronthaul link with 1ˢᵗ rate ⌐⌐202

Transmitting 2ⁿᵈ data stream over
2ⁿᵈ fronthaul link with 2ⁿᵈ rate ⌐⌐204

Obtaining information of failure of
1ˢᵗ link ⌐⌐206

Obtaining information of capacity of
2ⁿᵈ link ⌐⌐207

Determining maximum data rate for
1ˢᵗ data stream based on info on
capacity of 2ⁿᵈ link ⌐⌐218

Determining maximum data rate for
2ⁿᵈ data stream based on info on
capacity of 2ⁿᵈ link ⌐⌐219

Selecting 3ʳᵈ encoding scheme for
1ˢᵗ data stream and 4ᵗʰ encoding
scheme for 2ⁿᵈ data stream ⌐⌐208

Transmitting information indicating
3ʳᵈ and 4ᵗʰ data rate ⌐⌐210

Transmitting 1ˢᵗ data stream with
3ʳᵈ data rate over 1ˢᵗ resources of
2ⁿᵈ link ⌐⌐212

Transmitting 2ⁿᵈ data stream with
4ᵗʰ data rate over 2ⁿᵈ resources of
2ⁿᵈ link ⌐⌐214

Fig. 2

```
┌─────────────────────────────────┐
│ Receiving 1st data stream over 1st │
│   fronthaul link with 1st rate    │ ⌇~302
└─────────────────────────────────┘
                 │
                 ▼
┌─────────────────────────────────┐
│ Receiving 2nd data stream over 2nd │
│   fronthaul link with 2nd rate    │ ⌇~304
└─────────────────────────────────┘
                 │
                 ▼
┌─────────────────────────────────┐
│  Obtaining information of failure of │
│             1st link              │ ⌇~306
└─────────────────────────────────┘
                 │
                 ▼
┌ ─ ─ ─ ─ ─ ─ ─ ─ ─ ─ ─ ─ ─ ─ ─ ─ ┐
  Obtaining information of capacity of
│              2nd link             │ ⌇~308
└ ─ ─ ─ ─ ─ ─ ─ ─ ─ ─ ─ ─ ─ ─ ─ ─ ┘
                 │
                 ▼
┌ ─ ─ ─ ─ ─ ─ ─ ─ ─ ─ ─ ─ ─ ─ ─ ─ ┐
   Selecting 3rd decoding scheme for
│  1st data stream and 4th decoding  │ ⌇~310
    scheme for 2nd data stream
└ ─ ─ ─ ─ ─ ─ ─ ─ ─ ─ ─ ─ ─ ─ ─ ─ ┘
                 │
                 ▼
┌ ─ ─ ─ ─ ─ ─ ─ ─ ─ ─ ─ ─ ─ ─ ─ ─ ┐
   Receiving information of 3rd and 4th
│         decoding scheme          │ ⌇~312
└ ─ ─ ─ ─ ─ ─ ─ ─ ─ ─ ─ ─ ─ ─ ─ ─ ┘
                 │
                 ▼
┌─────────────────────────────────┐
│   Receiving 1st data stream with 3rd │
│  data rate over 1st resources of 2nd │ ⌇~314
│              link                 │
└─────────────────────────────────┘
                 │
                 ▼
┌─────────────────────────────────┐
│   Receiving 2nd data stream with 4th │
│  data rate over 2nd resources of 2nd │ ⌇~316
│              link                 │
└─────────────────────────────────┘
                 │
                 ▼
┌ ─ ─ ─ ─ ─ ─ ─ ─ ─ ─ ─ ─ ─ ─ ─ ─ ┐
   Decoding 1st data stream using 3rd
│         decdoing scheme          │ ⌇~318
└ ─ ─ ─ ─ ─ ─ ─ ─ ─ ─ ─ ─ ─ ─ ─ ─ ┘
                 │
                 ▼
┌ ─ ─ ─ ─ ─ ─ ─ ─ ─ ─ ─ ─ ─ ─ ─ ─ ┐
   Decoding 2nd data stream using 4th
│         decdoing scheme          │ ⌇~320
└ ─ ─ ─ ─ ─ ─ ─ ─ ─ ─ ─ ─ ─ ─ ─ ─ ┘
```

Fig. 3

410

## BBU

412

BBF

UP
C&M
Sync

414

FFH

416

FLH

430

420

## RU

426

FLH

424

FFH

422

UP
C&M
Sync

RFU

440

FLH

428

418

FLH

**Fig. 4**

Detecting link failure — 502

Calculating available capacity on the functional links — 504

Applying appropriate compression format based on available capacity — 506

Mapping user-plane data into communication resources of functional links — 508

Sending compression format and mapping to BBU/RU — 510

Sending user-plane data to BBU/RU. — 512

**Fig. 5**

Detecting link failure — 552

Calculating available capacity on the functional links — 554

Applying fallback compression format and mapping scheme — 556

Sending user-plane data to BBU/RU — 558

**Fig. 6**

Fig. 7

Fig. 8

**REFERENCES CITED IN THE DESCRIPTION**

**Patent documents cited in the description**

- WO 2018004409 A
- US 2018034669 A1